# EUROPEAN PATENT APPLICATION

(11) **EP 2 682 209 A1**
(43) Date of publication of application: **08.01.2014**
(21) Application number: 12752843.8
(22) Date of filing: 27.02.2012
(51) Int. Cl.: B23B 27/14, B23B 27/04, B23C 5/08, B23C 5/20

(54) **CUTTING INSERT**

(30) Priority: 28.02.2011 JP 2011042714
(71) Applicant: Mitsubishi Materials Corporation, Chiyoda-ku Tokyo 100-8117 (JP)
(72) Inventor: SAITO Takayoshi, Joso-shi Ibaraki 300-2795 (JP); HAYASHIZAKI Hiroaki, Joso-shi Ibaraki 300-2795 (JP)
(74) Representative: HOFFMANN EITLE
(86) International application number: PCT/JP2012/054758
(87) International publication number: WO 2012/118009

(57) **Abstract**

A cutting insert is provided with an insert main body formed in the shape of a tetragonal plate, and the insert main body has a pair of tetragonal faces (2) and four side faces (3). Four cutting edges (7) are formed at ridge lines between the adjacent side faces (3), each of which is provided with a major cutting edge (5) and a pair of minor cutting edges (6) extending from both ends of the major cutting edge (5). Four tetragonal rake faces (8) are formed on a pair of side faces (3a, 3a), the three sides of each of which is formed by the major cutting edge (5) and the pair of minor cutting edges (6). A major cutting edge (5a) continuing to a first rake face (8a) and a major cutting edge (5b) continuing to a second rake face (8b) extend in a different direction to each other so as to intersect in an X-letter shape.

## Description

### Technical Field

The present invention relates to a cutting insert which is used for groove processing.

Priority is claimed on Japanese Patent Application No. 2011-042714 filed on February 28, 2011, in Japan, the content of which is incorporated herein by reference.

### Background Art

As a conventional cutting insert which is formed in the shape of a tetragonal plate and used for groove processing, a cutting insert disclosed in Patent Document 1 is known. This cutting insert is provided with an insert main body formed in the shape of a tetragonal plate, and the insert main body is provided with a pair of tetragonal faces kept apart in an insert thickness direction and four side faces connecting sides of the tetragonal faces in the insert thickness direction. A major cutting edge extending along the insert thickness direction and a pair of minor cutting edges extending along the sides of the tetragonal faces from both ends of the major cutting edge are formed at each of four ridge lines between the adjacent side faces of the insert main body, thereby constituting each of four cutting edges. Further, on the side faces, four tetragonal rake faces are formed, and the three sides of each of the four tetragonal rake faces are formed by the major cutting edge and the pair of minor cutting edges.

When used in turning, this type of cutting insert is fixed with a screw or by using a clamp mechanism so as to be attached in a detachable manner at a tip of a shaft-like tool main body and used for groove processing in a state such that one of four cutting edges is disposed so as to oppose an outer face of a workpiece which is, for example, formed in a cylindrical shape and rotates axially. Further, when used in milling, a plurality of cutting inserts are fixed so as to be attached in a detachable manner at an outer circumference of a tip of a tool main body which is formed in a cylindrical shape and rotates axially around a tool, with intervals kept in a circumferential direction, thereby giving groove processing to a wall surface of a workpiece in a state such that one of four cutting edges of each cutting insert is projected from an outer circumference face of the tool main body.

### Prior Art Document

### Patent Document

Patent Document 1: WO87/03831

### SUMMARY OF THE INVENTION

### Problems to be Solved by the Invention

However, the above-described conventional cutting insert has the following problems.

That is, when a cutting edge of the cutting insert is used to perform groove processing to an outer face of a workpiece, etc., to attain a predetermined groove depth or more, in the case of turning, other cutting edges positioned further forward in a rotating direction of the workpiece than the cutting edge in process of groove processing will enter into a groove which has been machined. In the case of milling, other cutting edges positioned further backward in a rotating direction of a tool than the cutting edge in groove processing will enter into a groove which has been machined. Thereby, the other cutting edges which are not in use may make contact with a groove wall to damage a machined surface. In view of the above-described situation, the conventional cutting insert has been used only for shallow groove processing so that a groove shape that can be machined will not exceed a predetermined groove depth.

There is also a case where a new cutting edge may be damaged by being brought into contact with a groove wall and wasted, although other cutting edges are not in use.

An object of the present invention provides a cutting insert which is capable of preventing other cutting edges different from a cutting edge used for cutting from making contact with a groove wall of a groove which has been machined even on deep groove processing, thereby sufficiently securing accuracy of machining the groove and also preventing damage of a cutting edge which is not yet used.

### Means for Solving the Problems

In order to attain the above object, the present invention has proposed the following means.

One aspect of the cutting insert of the present invention is provided with an insert main body formed in the shape of a tetragonal plate, the insert main body having a pair of tetragonal faces kept apart in a direction of a thickness of the insert main body and having four side faces connecting sides of the tetragonal faces in the direction of the thickness of the insert main body.

Four cutting edges are formed at ridge lines between the adjacent side faces of the insert main body, each of the four cutting edges being provided with a major cutting edge extending along the direction of the thickness of the insert main body and a pair of minor cutting edges extending along the sides of the tetragonal faces from both ends of the major cutting edge.

Four tetragonal rake faces are formed on a pair of side faces of the four side faces, the pair of side faces facing opposite each other, the three sides of each of the four tetragonal rake faces being formed by the major cutting edge and the pair of minor cutting edges.

As seeing in the front a first rake face of the four rake faces, the major cutting edge continuing to the first rake face and the major cutting edge continuing to a second rake face, which faces opposite the first rake face, extend in a different direction to each other so as to intersect in an X-letter shape.

When the cutting insert is used to perform groove processing, a major cutting edge of a cutting edge used for cutting is disposed so as to be in parallel with, for example, an outer face of a workpiece. With the cutting insert kept in the above-described manner, the cutting edge comes close to the workpiece to perform groove machining to the outer face thereof. Next, when there is obtained a predetermined groove depth or more, the cutting edge of the second rake face which faces opposite the rake face (the first rake face) on which the cutting edge is disposed is housed inside a groove which has been machined.

That is, as seeing in the front the first rake face, the major cutting edge of the first rake face and the major cutting edge of the second rake face extend in a different direction to each other so as to intersect in an X-letter shape. In other words, the major cutting edge of the first rake face and the major cutting edge of the second rake face are in a twisted positional relationship. Since the major cutting edge of the first rake face is disposed in parallel in a groove width direction, the major cutting edge of the second rake face is disposed so as to incline in the groove width direction. Thereby, a length of the major cutting edge of the second rake face along the groove width direction is shorter than a groove width of the groove which has been machined by the major cutting edge of the first rake face. As a result, the cutting edge of the second rake face does not make contact with a groove wall of the groove which has been machined by the cutting edge of the first rake face, and the cutting edge of the second rake face is housed inside the groove.

As described above, according to the cutting insert of the present invention, even when deep groove processing is performed, the cutting edge of the second rake face is prevented from making contact with the groove wall, thereby sufficiently securing accuracy of machining the groove. Therefore, the groove can be machined in various shapes (in particular, groove depth). Further, where a cutting edge of the second rake face is not in use, the cutting edge not in use is prevented from being damaged due to contact with a groove wall, and thus, the cutting edge is not wasted.

Still further, in the cutting insert of the present invention, it is acceptable that, as seeing in the front the first rake face, the major cutting edge continuing to the first rake face extends so as to incline gradually to the outside of the other tetragonal face while being close to the other tetragonal face from one tetragonal face of the pair of tetragonal faces. It is also acceptable that the major cutting edge continuing to the second rake face extends so as to incline gradually to the inside of the other tetragonal face while being close to the other tetragonal face from one tetragonal face.

In this case, when the cutting edge of the first rake face is used to perform cutting and the cutting edge thereof is then exchanged to the cutting edge of the second rake face to perform cutting, the cutting insert is detached from a tool main body, the cutting insert is reversed in an insert thickness direction so as to change the positions of the rake faces with each other, and the cutting insert is again attached to the tool main body. Thereby, the major cutting edge ofthe second rake face is disposed simply and accurately at the same position where the major cutting edge of the first rake face was located. Thus, the cutting edge can be positioned easily on exchange to result in saving of time and labor.

In the cutting insert of the present invention, as seeing in the front the first rake face, it is acceptable that an intersection angle formed by the major cutting edge continuing to the first rake face and the major cutting edge continuing to the second rake face is from 17° to 20°.

In this case, when the cutting edge of the first rake face is used to perform groove processing, the cutting edge of the second rake face is reliably prevented from making contact with a groove wall, thereby securing rigidity of the insert main body.

That is, where the intersection angle is less than 17°, the major cutting edge of the second rake face is not allowed to sufficiently incline in a groove width direction, and there is a fear that the cutting edge of the second rake face may make contact with a groove wall. Further, where the intersection angle is in excess of 20°, the major cutting edge inclines to a greater extent. It is, therefore, necessary that the minor cutting edges are formed so as to incline at a large angle with decreasing the thickness of the insert main body while being spaced away from the major cutting edge so that the minor cutting edges of the cutting edge used for cutting are not in contact with the groove wall. There is a fear that the insert main body may not be sufficiently secured for rigidity due to a decrease in thickness of the insert main body.

Further, in the cutting insert of the present invention, it is acceptable that, four major flank faces are formed on the other pair of side faces of the four side faces, the other pair of side faces being different from the pair of side faces on which the rake faces are formed, each of which is adjacent to the rake face with the major cutting edge positioned between the major flank face and the rake face, and as seeing in the front a first major flank face of the four major flank faces, the major cutting edge continuing to the first major flank face and the major cutting edge continuing to a second major flank face, which faces opposite the first major flank face, extend in a different direction to each other so as to intersect in an X-letter shape.

In this case, the major cutting edge of the first major flank face used for cutting can be disposed so as to incline gradually either forward or backward in an extending direction of a groove to be machined, while being close to the other end from one end in the groove width direction. Thereby, the major cutting edge can be improved in sharpness and chips can be removed more efficiently.

### Effects of the Invention

According to the cutting insert of the present invention, even on deep groove processing, the other cutting edges different from a cutting edge used for cutting are prevented from making contact with a groove wall of a groove which has been machined. Thereby, it is possible to sufficiently secure accuracy of machining the groove and also to prevent damage of a cutting edge not in use.

### BRIEF DESCRIPTION OF THE DRAWINGS

FIG. 1 is a top view showing an edge-exchange type grooving tool equipped with a cutting insert of one embodiment in the present invention.
FIG. 2 is a side view showing the edge-exchange type grooving tool equipped with the cutting insert of one embodiment in the present invention.
FIG. 3 is a bottom view showing the edge-exchange type grooving tool equipped with the cutting insert of the one embodiment in the present invention.
FIG. 4 is a front view of the edge-exchange type grooving tool equipped with the cutting insert of one embodiment in the present invention, when viewed from the tip of a tool main body.
FIG. 5 is a drawing showing the cutting insert of one embodiment in the present invention, when viewed from the side of a tetragonal face of an insert main body.
FIG. 6 is a drawing showing the cutting insert of one embodiment in the present invention, when viewed from a side face on which rake faces are formed, of side faces of the insert main body.
FIG. 7 is a drawing showing the cutting insert of one embodiment in the present invention, when viewed from a side face on which a major flank face is formed, of the side faces of the insert main body.
FIG. 8 is a drawing showing a cross-section taken along Line A to A in FIG. 5.
FIG. 9 is an enlarged view showing the vicinity of a first rake face of the cutting insert used for cutting according to one embodiment of the present invention and a drawing which explains a cross sectional shape of a groove formed on a workpiece by cutting.
FIG. 10 is an enlarged view showing the vicinity of the major cutting edge continuing to a first major flank face in FIG. 7.

### MODE FOR CARRYING OUT THE INVENTION

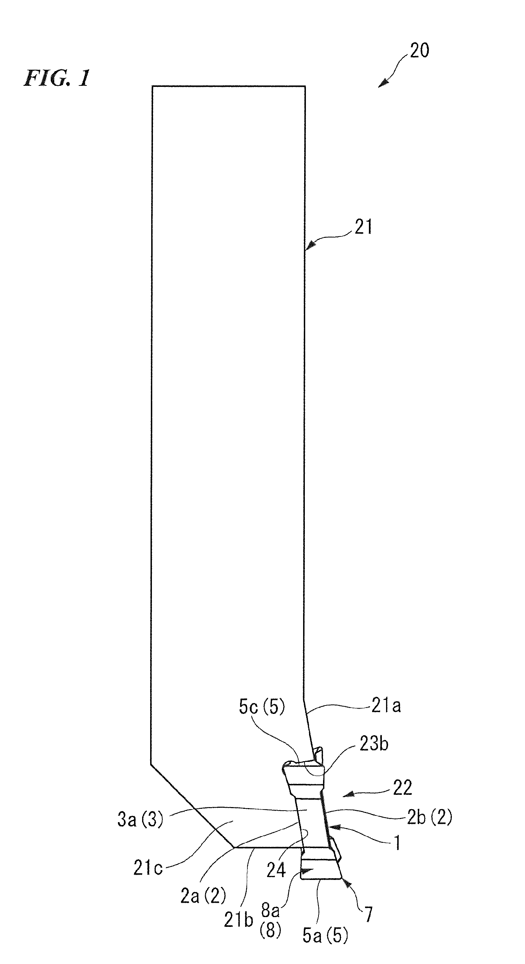

Hereinafter, a description will be given of a cutting insert 1 of one embodiment in the present invention and an edge-exchange type grooving tool 20 equipped with the cutting insert 1 at a tool main body 21 by referring to FIG. 1 to FIG.9.

The cutting insert 1 of the present embodiment and the edge-exchange type grooving tool 20 are used for groove processing on turning, giving, for example, outer-diameter groove processing to an outer face of a workpiece formed in the shape of a cylinder.

As shown in FIG.1 to FIG.4, the edge-exchange type grooving tool 20 is provided with a tool main body 21, an insert attachment seat 22 and a cutting insert 1. The tool main body 21 is made of shaft-like steel or the like and formed so as to provide a tetragonal cross-section which is perpendicular to its extending direction. The insert attachment seat 22 is formed at the tip of the tool main body 21 in the shape of a tetragonal parallelepiped hole which is opened at one (the right side of FIG. 1) tool side face 21 a of a pair of tool side faces facing laterally (the lateral direction in FIG.1), a tip face 21b and an upper face 21c. The cutting insert 1 is made of a cemented carbide or the like and fixed to the insert attachment seat 22 with a screw so as to be attached in a detachable manner.

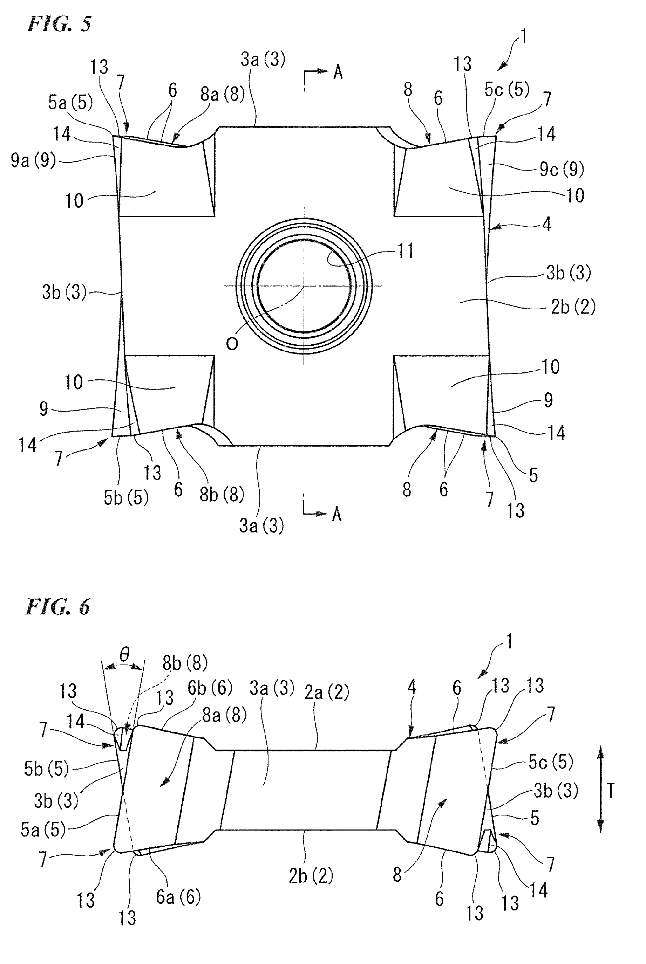

As shown in FIG.5 to FIG.8, the cutting insert 1 is provided with an insert main body formed in the shape of a tetragonal plate. The insert main body is provided with a pair of tetragonal faces 2 kept apart in a direction T of a thickness of the insert main body and four side faces 3 formed so as to connect sides of the tetragonal faces 2 in the insert thickness direction T. At ridge lines between adjacent side faces 3 of the insert main body 4, four cutting edges 7 are formed, each of which has a major cutting edge 5 extending so as to run along the insert thickness direction T and a pair of minor cutting edges 6 extending from both ends of the major cutting edge 5 so as to run along the sides of the tetragonal faces 2. Of the four side faces 3, on a pair of side faces 3a, 3a which face opposite each other, four tetragonal rake faces 8 are formed, the three sides of each of which is formed by the major cutting edge 5 and the pair of minor cutting edges 6. Of these four side faces 3, on a pair of side faces 3b, 3b which face opposite each other in a direction different from the pair of side faces 3a, 3 a on which the rake faces 8 are formed, four major flank faces 9 are formed, each of which is adjacent to the rake face 8, with the major cutting edge 5 positioned between them.

In FIG.5 and FIG.6, the insert main body 4 is constituted in such a manner that the faces kept apart in their insert thickness direction T are provided as a pair of tetragonal faces 2 and outer circumference faces which face in a direction perpendicular to the insert thickness direction T and also outside the tetragonal faces 2 (externally in in-plane directions of the tetragonal faces 2) are provided as four side faces 3.

As shown in Fig.5, the insert main body 4 assumes a rotational symmetry at the center of an insert central axis O passing through the centers of the tetragonal faces 2 and extending in the insert thickness direction T. More specifically, the insert main body 4 is formed so as to assume a dyad symmetry (180° symmetry) with respect to the insert central axis O.

In FIG.6 to FIG.8, the insert main body 4 is also formed so as to assume a dyad symmetry (180° symmetry) respectively with respect to two virtual axes perpendicular to the insert central axis O and passing through the centers of the side faces 3 (a virtual axis passing through the center of the side faces 3a, 3a and a virtual axis passing through the center of the side faces 3b, 3b). That is, the insert main body 4 is formed so as to assume a rotational symmetry on both faces with respect to the above-described two virtual axes.

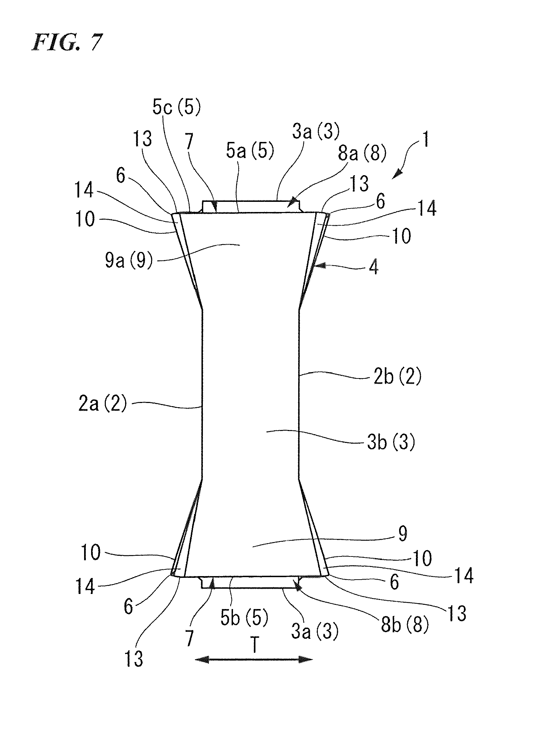

In FIG.6 and FIG.7, each of the side faces 3a and the side faces 3b of the insert main body 4 is formed in a tetragonal shape which is longer around the insert central axis O than in the direction of the insert central axis O (or in the insert thickness direction T). Further, each of the side faces 3a, 3b is greatest in thickness at both ends.

In FIG.6, at the both ends of each of the side faces 3a in the longitudinal direction (the lateral direction in FIG.6), a pair of rake faces 8 are formed so as to provide a trapezoid, with the major cutting edge 5 as a lower bottom of trapezoid. As shown in Fig.5, the rake face 8 inclines gradually to the inside of the tetragonal faces 2 (inside in in-plane directions of the tetragonal faces 2) while being spaced away from the major cutting edge 5.

Further, an inner part of the rake face 8 on the side face 3a (the central part in the longitudinal direction) is formed so as to provide a recessed curved surface.

In FIG.7, at both ends of each of the side faces 3b in the longitudinal direction (the vertical direction in FIG.7), a pair of major flank faces 9 are formed so as to provide a trapezoid, with the major cutting edge 5 provided as a lower bottom of trapezoid. As shown in Fig.5, the major flank face 9 inclines gradually to the inside of the tetragonal faces 2 while being spaced away from the major cutting edge 5.

Further, each of the side faces 3b is formed so as to provide a linear cross-section perpendicular to the longitudinal direction and also the linear cross-section is formed so as to be gradually twisted in a continuous manner or in a stepwise manner while being close to the second major cutting edge 5b positioned at the other end in the longitudinal direction from the first major cutting edge 5a positioned at one end thereof.

Further, as shown in FIG.5 and FIG.7, at each of four corners of the tetragonal face 2, a minor flank face 10 is formed in a tetragonal shape which continues to the rake face 8 and the major flank face 9 and also inclines gradually to the inside (to the central side) in the insert thickness direction T while being close to the inside of the tetragonal face 2 from the minor cutting edges 6.

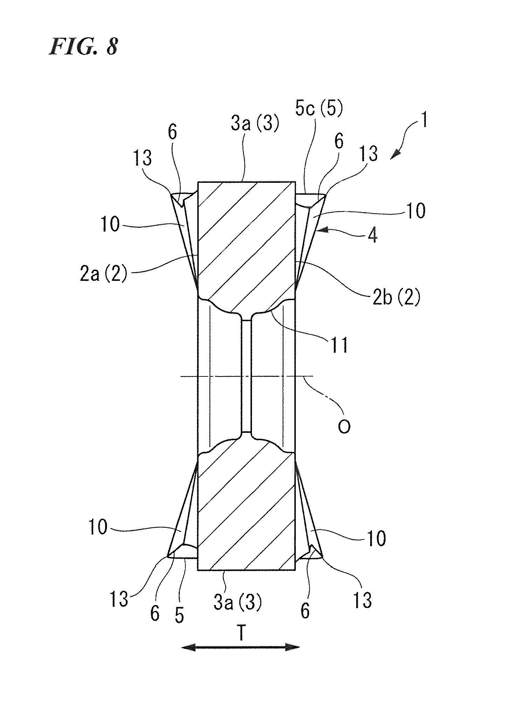

In FIG.5 and FIG.8, the insert main body 4 is provided with an attachment hole 11 which is opened at the center of the pair of tetragonal faces 2, coaxially with the insert central axis O and passing through the insert main body 4 in the insert thickness direction T. As shown in FIG. 8, the attachment hole 11 is smallest in inner diameter at a central part in the insert thickness direction T and increased in inner diameter gradually in a stepwise manner and smoothly while being close to the outside of the insert main body 4 in the insert thickness direction T from the central part.

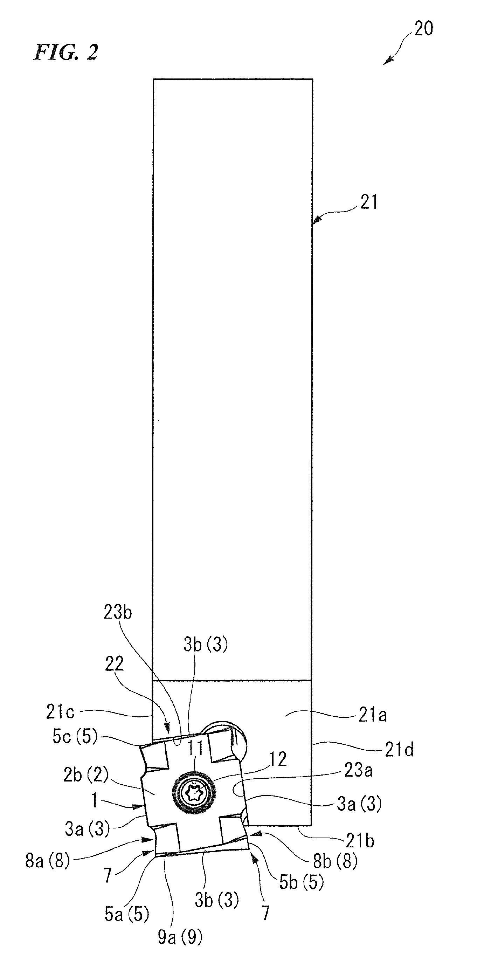

As shown in FIG.2, the cutting insert 1 is attached to the tool main body 21 by inserting a clamp screw 12 into the attachment hole 11 and screwing it into a threaded hole (not illustrated) of the insert attachment seat 22 on the tool main body 21.

As described above, with the cutting insert 1 attached to the insert attachment seat 22 on the tool main body 21, one side face 3a of the pair of side faces 3a, 3a in the insert main body 4 is exposed to the upper face 21 c of the tool main body 21, while the other side face 3a is in contact with a wall surface 23a facing upward in the insert attachment seat 22. Further, one side face 3b of the pair of side faces 3b, 3b in the insert main body 4 is exposed to the tip face 21b of the tool main body 21, while the other side face 3b is in contact with a wall surface 23b facing the tip in the insert attachment seat 22.

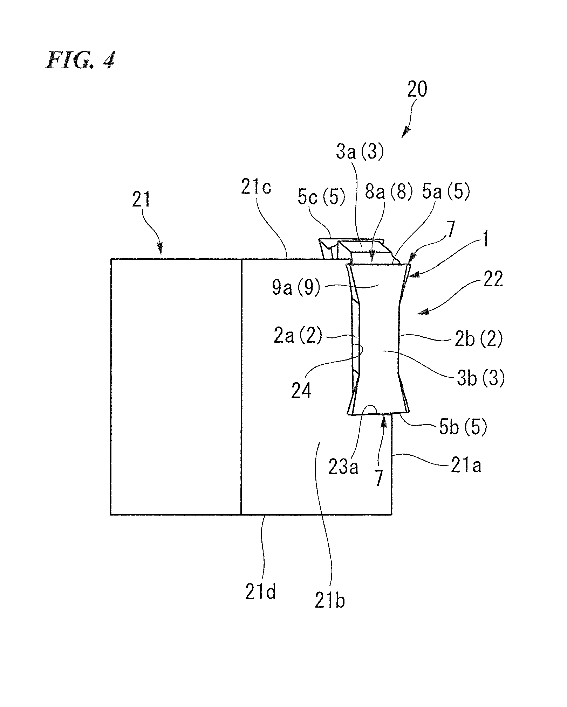

Still further, as shown in FIG.1 and FIG.4, one tetragonal face 2a of the pair of tetragonal faces 2 (2a, 2b) in the insert main body 4 is brought into contact with an attachment seat surface 24 which faces in the same direction as that of the tool side face 21a on the insert attachment seat 22.

When viewed from the side face of the tool main body 21 in FIG.2, the side face 3a of the cutting insert 1 exposed to the upper face 21c of the tool main body 21 inclines gradually to the upper side (the left side in FIG. 2) while being close to the rear end of the tool main body 21 from the tip thereof. Further, the side face 3b of the cutting insert 1 exposed to the tip face 21b of the tool main body 21 inclines gradually to the rear end while being close to the lower face 21d of the tool main body 21 from the upper face 21c thereof. Thereby, the major cutting edge 5a (5) which forms a ridge line between the side faces 3a, 3b and is used for cutting is disposed so as to protrude to the tip ofthe tool main body 21.

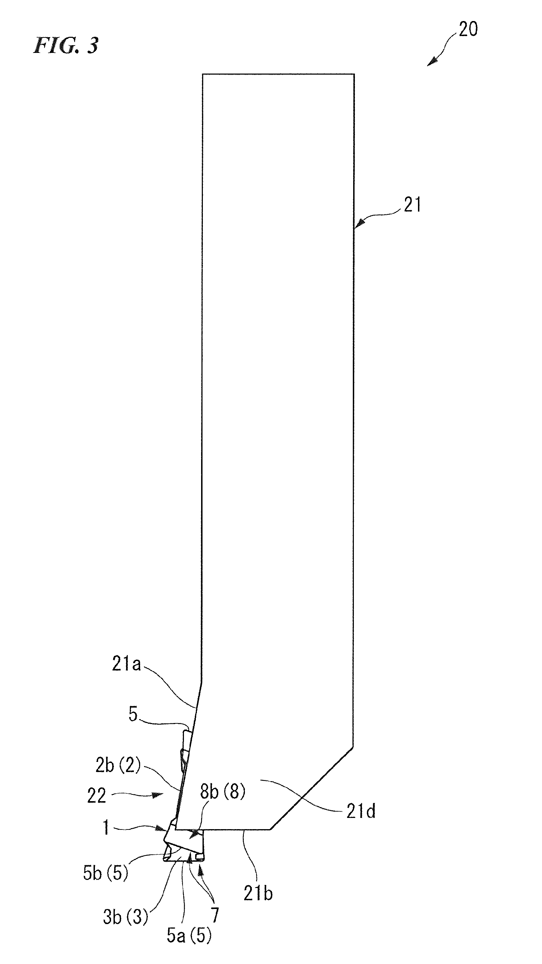

With the cutting insert 1 fixed to the insert attachment seat 22 as described above, the other major cutting edge 5b (5) positioned below the major cutting edge 5a (the right side in FIG.2) is disposed so as to protrude further to the tip than the tip face 21b ofthe tool main body 21. More specifically, as shown in FIG.3, when the tool main body 21 is viewed from the lower face 21d, substantially all the region covering the cutting edge 7 having the other major cutting edge 5b and the rake face 8b is exposed outside.

Next, as shown in FIG.6, of four rake faces 8 of the cutting insert 1, as seeing in the front the first rake face 8a, the cutting insert 1 is such that the major cutting edge 5a continuing to the first rake face 8a and the major cutting edge 5b continuing to the second rake face 8b facing opposite the first rake face 8a extend in a different direction to each other so as to intersect in an X-letter shape (the two linear major cutting edges 5a, 5b assume an X-letter shape). That is, in the cutting insert 1, the major cutting edge 5a continuing to the first rake face 8a and the major cutting edge 5b continuing to the second rake face 8b are in a twisted positional relationship.

More specifically, as seeing in the front the first rake face 8a, while being close to the other tetragonal face 2b (the lower part in FIG.6) from one tetragonal face 2a (the upper part in FIG.6) of the pair of tetragonal faces 2, the major cutting edge 5a continuing to the first rake face 8a extends so as to incline gradually to the outside of the other tetragonal face 2b (on the left side in FIG.6). Further, while being close to the other tetragonal face 2b from one tetragonal face 2a, the major cutting edge 5b continuing to the second rake face 8b extends so as to incline gradually to the inside of the other tetragonal face 2b (on the right side in FIG.6).

Further, as seeing in the front the first rake face 8a, an intersection angle 0 formed by the major cutting edge 5a continuing to the first rake face 8a and the major cutting edge 5b continuing to the second rake face 8b is set in a range of 17° to 20°.

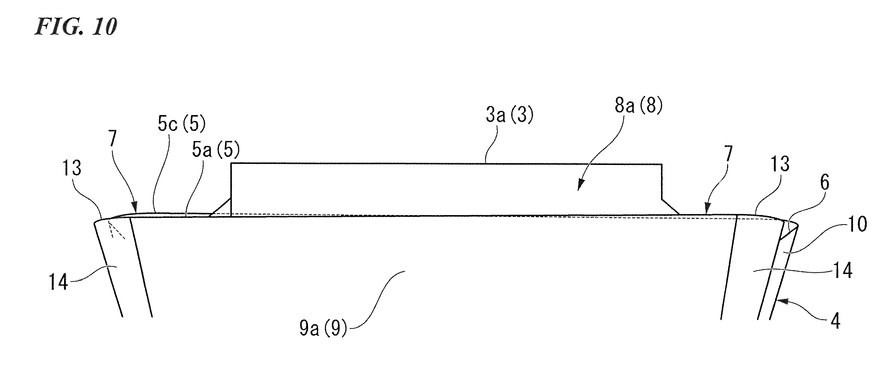

Still further, in the present embodiment, as shown in FIG. 7 and FIG.10, of four major flank faces 9 of the cutting insert 1, as seeing in the front the first major flank face 9a, the major cutting edge 5a continuing to a first major flank face 9a and the major cutting edge 5c continuing to a second major flank face 9c facing opposite the first major flank face 9a extend in a different direction to each other so as to intersect in an X-letter shape. That is, the major cutting edge 5a and the major cutting edge 5c are in a twisted positional relationship.

Still further in FIG.6, both ends of the major cutting edge 5 are provided as a pair of comer edges 13 formed in a raised curved shape. The corner edge 13 is formed so as to smoothly connect a linear part of the major cutting edge 5 with the minor cutting edges 6.

Still further, as shown in FIG.5, as seeing in the front the tetragonal faces 2, each of the minor cutting edges 6 extends from the major cutting edge 5 to the center of the side face 3a in the longitudinal direction and inclines gradually to the inside of the tetragonal faces 2 while being spaced away from the major cutting edge 5.

Still further, as shown in FIG.6, as seeing in the front the side face 3a, the minor cutting edges 6 extend so as to incline gradually inside in the insert thickness direction T while being spaced away from the major cutting edge 5. More specifically, a description will be given by referring to the pair of minor cutting edges 6 (6a, 6b) continuing to the major cutting edge 5a as an example. Of the pair of minor cutting edges 6a, 6b, one minor cutting edge 6a is such that a connection part with the major cutting edge 5a is positioned outside the tetragonal face 2. The other minor cutting edge 6b is such that a connection part with the major cutting edge 5 is positioned further inside the tetragonal faces 2 than the connection part of one minor cutting edge 6a. One minor cutting edge 6a is decreased in displacement to the inside of the insert in the insert thickness direction T per unit length along the side face 3 a in the longitudinal direction, as compared with the other minor cutting edge 6b.

In addition, as shown in FIG.5, a part continuing to the corner edge 13 on each major flank face 9 is provided as a corner flank face 14 which is formed in a raised curved surface. That is, the major flank face 9 continues smoothly to a minor flank face 10, with both ends thereof in the insert thickness direction T provided as a corner flank face 14.

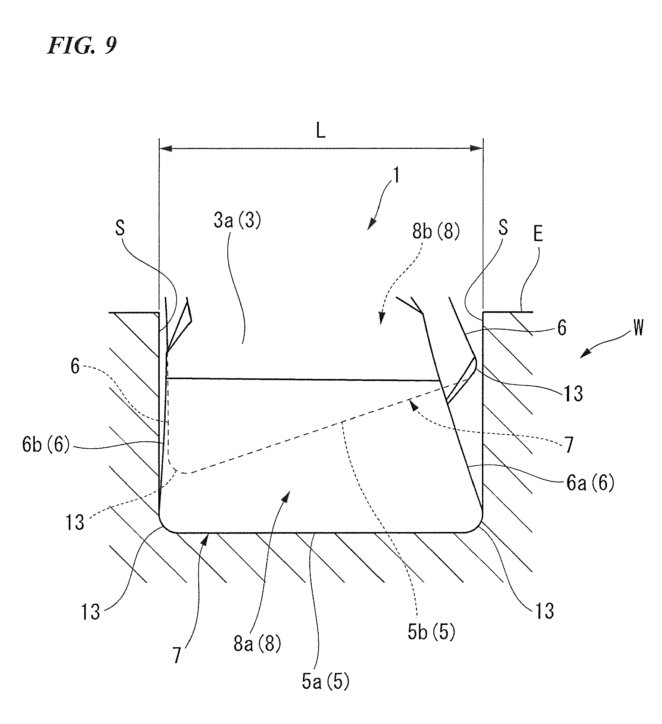

When the above-described cutting insert 1 of the present embodiment is used to perform groove processing, as shown in FIG.9, the major cutting edge 5a of the cutting edge 7 used for cutting is disposed in parallel with an outer face E of a workpiece W. With the cutting insert 1 attached in the above-described manner, the workpiece W is rotated around its axis and the cutting edge 7 comes close to the workpiece W to perform groove processing to the outer face E. Next, when a groove is machined in a predetermined depth or more, the cutting edge 7 of the second rake face 8b which faces opposite the rake face 8a (the first rake face) on which the cutting edge 7 is disposed is housed inside the groove which has been machined.

That is, as seeing in the front the first rake face 8a, the major cutting edge 5a of the first rake face 8a and the major cutting edge 5b of the second rake face 8b extend in a different direction to each other so as to intersect in an X-letter shape. In other words, the major cutting edge 5a of the first rake face 8a and the major cutting edge 5b of the second rake face 8b are in a twisted positional relationship. The major cutting edge 5a of the first rake face 8a is disposed in parallel in the groove width direction (the lateral direction in FIG. 9). Therefore, the major cutting edge 5b of the second rake face 8b is disposed so as to incline in the groove width direction. Thereby, a length of the major cutting edge 5b of the second rake face 8b along the groove width direction is shorter than a groove width L of the groove which has been machined by the major cutting edge 5a of the first rake face 8a. As a result, the cutting edge 7 of the second rake face 8b is housed in the groove without making contact with a groove wall S of the groove which has been machined by the cutting edge 7 of the first rake face 8a.

As described so far, according to the cutting insert 1 of the present embodiment, even on deep groove processing, the cutting edge 7 of the second rake face 8b is prevented from making contact with the groove wall S to sufficiently secure accuracy of machining a groove. Therefore, the groove is machined in a wide variety of shapes (in particular, groove depth). Further, when the cutting edge 7 of the second rake face 8b is not used, the cutting edge 7 which is not used is prevented from being damaged due to contact with the groove wall S, and therefore, the cutting edge 7 is not wasted.

Further, in the cutting insert 1, as seeing in the front the first rake face 8a, while being close to the other tetragonal face 2b from one tetragonal face 2a, the major cutting edge 5a continuing to the first rake face 8a inclines gradually to the outside of the other tetragonal face 2b. Still further, while being close to the other tetragonal face 2b from one tetragonal face 2a, the major cutting edge 5b continuing to the second rake face 8b inclines gradually to the inside of the other tetragonal face 2b. In addition, the cutting edge 7 having the major cutting edge 5a and the cutting edge 7 having the major cutting edge 5b are disposed so as to assume a 180° symmetry (dyad symmetry) with each other with respect to the virtual axis passing through the centers of the side faces 3b, 3b. Therefore, for example, when the cutting edge 7 of the first rake face 8a is used to perform cutting and the cutting edge is then exchanged to the cutting edge 7 of the second rake face 8b to perform cutting, the cutting insert 1 is detached from a tool main body 21, the cutting insert 1 is reversed (turned at 180° around the virtual axis) in the insert thickness direction T so as to change the positions of the rake faces 8a, 8b with each other, and the cutting insert 1 is again attached to the tool main body 21 by allowing the tetragonal face 2b to make contact with the attachment seat surface 24. Thereby, the major cutting edge 5b of the second rake face 8b is disposed simply and accurately at the same position at which the major cutting edge 5a of the first rake face 8a was located before. Thus, the cutting edge 7 can be positioned easily on exchange to result in saving of time and labor.

Further, as seeing in the front the first rake face 8a, an intersection angle θ formed by the major cutting edge 5a continuing to the first rake face 8a and the major cutting edge 5b continuing to the second rake face 8b is from 17° to 20°. Therefore, on groove processing by using the cutting edge 7 of the first rake face 8a, it is possible to reliably prevent the cutting edge 7 of the second rake face 8b from making contact with the groove wall S and secure rigidity of the insert main body 4.

That is, when the intersection angle θ is less than 17°, the major cutting edge 5b of the second rake face 8b will not incline sufficiently in the groove width direction and there is a possibility of that the cutting edge 7 of the rake face 8b may make contact with the groove wall S. Further, when the intersection angle θ is in excess of 20°, the major cutting edge 5 inclines greatly. Therefore, the minor cutting edges 6 are required to be formed so as to incline at a large angle with decreasing the thickness of the insert main body while being spaced away from the major cutting edge 5 so that the minor cutting edges 6 of the cutting edge 7 used for cutting are not in contact with the groove wall S. There is a possibility of that the insert main body 4 may be decreased in thickness, thereby failing in securing rigidity of the insert main body 4.

Further, as seeing in the front the first major flank face 9a, the major cutting edge 5a continuing to the first major flank face 9a and the major cutting edge 5c continuing to the second major flank face 9c which faces opposite the first major flank face 9a extend in a different direction to each other so as to intersect in an X-letter shape. In other words, the major cutting edge 5a and the major cutting edge 5c are in a twisted positional relationship, thereby providing the following effects. That is, the major cutting edge 5a of the first major flank face 9a used for cutting can be disposed so as to incline gradually either forward or backward in an extending direction of a groove to be machined, while being close to the other end of the groove from one end thereof in the groove width direction. Thereby, the cutting edge can be increased in sharpness and chips can be removed more efficiently.

Further, the cutting insert 1 is a square-type insert in which the cutting edge 7 is formed at each of four corners of the insert main body 4 formed in the shape of a tetragonal plate. Accordingly, the insert main body 4 is high in rigidity and the cutting edges 7 usable for one unit of the cutting insert 1 are provided in a sufficient number. Thereby, a tool is expected to have a longer service life. That is, a conventional insert having a rod-shape with a dog-bone-shape is such that a cutting edge is formed only at both ends of two corners and fewer in the number of cutting edges. Further, the insert main body is not sufficient in rigidity, thus resulting in a shorter tool life.

The present invention shall not be limited to the above-described embodiment but may be modified in various ways within a scope not departing from the gist of the present invention, for example, as described below.

In the above-described embodiment, the cutting insert 1 and the edge-exchange type grooving tool 20 are provided to perform outer-diameter groove processing to an outer face E of a workpiece W formed in the shape of a cylinder. It is, however, acceptable that they may perform other types of groove processing. That is, in place of the outer diameter groove processing, for example, they may perform inner diameter groove processing to an inner face of a workpiece W formed in the shape of a cylinder. Alternatively, they may perform end-face groove processing to an end face of a workpiece W which faces in an axial direction.

Further, the cutting insert 1 and the edge-exchange type grooving tool 20 are to be used in groove processing on turning, to which the present invention shall not be, however, limited. The present invention may include, for example, a slotting cutter which is used for groove processing on milling. In this case, a plurality of cutting inserts 1 are fixed so as to be attached in a detachable manner at an outer circumference of the tip of a tool main body which is formed in the shape of a cylinder and rotates around the axial line of a tool, with intervals kept in a circumferential direction. And, each of the cutting inserts 1 is used to perform groove processing to the wall surface of a workpiece W etc., in a state that, of four cutting edges 7, one cutting edge 7 of each cutting insert 1 is allowed to protrude from an outer circumference face of the tool main body.

Further, the edge-exchange type grooving tool 20 is available in any given shape depending on types of groove processing and shall not be limited to the shape described in the present embodiment.

Still further, the previously described groove processing includes not only ordinary groove processing but also cutting-through processing and undercutting (undercut processing).

Further, in the previously described embodiment, the cutting insert 1 is fixed to the tool main body 21 with a screw so as to be attached in a detachable manner. In place of this attachment, it is acceptable that the cutting insert 1 is fixed to the tool main body 21 by using a clamp mechanism so as to be attached in a detachable manner. It is also acceptable that the cutting insert 1 is fixed to the tool main body 21 with a screw and by using a clamp mechanism so as to be attached in a detachable manner. When the clamp mechanism is used, it is preferable that an upper flange portion and a lower flange portion be formed at the tip of the tool main body 21, with intervals kept in a vertical direction, and the upper flange portion and the lower flange portion clamp the side faces 3a, 3a of the cutting insert 1 so as to hold the side faces 3a, 3a between them in the vertical direction.

Further, in the previously described embodiment, as shown in FIG.7 and FIG.10, of four major flank faces 9 of the cutting insert 1, as seeing in the front the first major flank face 9a, the major cutting edge 5a continuing to the first major flank face 9a and the major cutting edge 5c continuing to the second major flank face 9c which faces opposite the first major flank face 9a extend in a different direction to each other so as to intersect in an X-letter shape. The present invention shall not be, however, limited thereto. That is, it is also acceptable that, as seeing in the front the first major flank face 9a, the major cutting edge 5a continuing to the first major flank face 9a and the major cutting edge 5c continuing to the second major flank face 9c which faces opposite the first major flank face 9a are kept in parallel with each other and extend along the insert thickness direction T.

### Description of reference numerals

- 1:: cutting insert
- 2:: tetragonal face
- 2a:: one tetragonal face
- 2b:: the other tetragonal face
- 3:: side faces
- 3a:: side face on which rake faces are formed
- 3b:: side face on which major flank face is formed
- 4:: insert main body
- 5:: major cutting edge
- 5a:: major cutting edge continuing to first rake face (first major flank face)
- 5b:: major cutting edge continuing to second rake face
- 5c:: major cutting edge continuing to the other major flank face
- 6:: minor cutting edge
- 7:: cutting edge
- 8:: rake face
- 8a:: first rake face
- 8b:: second rake face
- 9:: major flank face
- 9a:: first major flank face
- 9c:: second major flank face
- T:: insert thickness direction
- θ:: intersection angle

## Claims

1. A cutting insert comprises:
an insert main body formed in the shape of a tetragonal plate, the insert main body having a pair of tetragonal faces kept apart in a direction of a thickness of the insert main body and having four side faces connecting sides of the tetragonal faces in the direction of the thickness of the insert main body,
four cutting edges formed at ridge lines between the adjacent side faces of the insert main body, each of the four cutting edges being provided with a major cutting edge extending along the direction of the thickness of the insert main body and a pair of minor cutting edges extending along the sides of the tetragonal faces from both ends of the major cutting edge, and
four tetragonal rake faces formed on a pair of side faces of the four side faces, the pair of side faces facing opposite each other, the three sides of each of the four tetragonal rake faces being formed by the major cutting edge and the pair of minor cutting edges,
wherein, as seeing in the front a first rake face of the four rake faces, the major cutting edge continuing to the first rake face and the major cutting edge continuing to a second rake face, which faces opposite the first rake face, extend in a different direction to each other so as to intersect in an X-letter shape.

2. The cutting insert according to Claim 1, wherein
as seeing in the front the first rake face,
the major cutting edge continuing to the first rake face extends so as to incline gradually to the outside of the other tetragonal face while being close to the other tetragonal face from one tetragonal face of the pair of tetragonal faces, and
the major cutting edge continuing to the second rake face extends so as to incline gradually to the inside of the other tetragonal face while being close to the other tetragonal face from one tetragonal face.

3. The cutting insert according to Claim 1 or Claim 2, wherein,
as seeing in the front the first rake face,
an intersection angle formed by the major cutting edge continuing to the first rake face and the major cutting edge continuing to the second rake face is from 17° to 20°.

4. The cutting insert according to any one of Claims 1 to 3, wherein
four major flank faces are formed on the other pair of side faces of the four side faces, the other pair of side faces being different from the pair of side faces on which the rake faces are formed, each of which is adjacent to the rake face with the major cutting edge positioned between the major flank face and the rake face, and
as seeing in the front a first major flank face of the four major flank faces, the major cutting edge continuing to the first major flank face and the major cutting edge continuing to a second major flank face, which faces opposite the first major flank face, extend in a different direction to each other so as to intersect in an X-letter shape.
